# EUROPÄISCHE PATENTSCHRIFT

(11) **EP 0 577 929 B1**
(45) Veröffentlichungstag und Bekanntmachung des Hinweises auf die Patenterteilung: **23.10.1996**
(21) Anmeldenummer: 93105397.9
(22) Anmeldetag: 01.04.1993
(51) Int. Cl.: B23B 31/00, B23P 11/02

(54) **Verfahren und Vorrichtung zum Spannen von Werkzeugen in einem Spannfutter**
Process of and device for clamping tools in a chuck
Procédé et dispositif pour l'abloquage d'outils dans un mandrin

(30) Priorität: 12.05.1992 DE 4215606; 12.05.1992 DE 4215607
(43) Veröffentlichungstag der Anmeldung: 12.01.1994
(73) Patentinhaber: FX MARQUART GmbH, D-78564 Reichenbach (DE)
(72) Erfinder: Marquart, Uwe, W-7209 Reichenbach (DE)
(74) Vertreter: Gahlert, Stefan, Dr.-Ing.

(56) Entgegenhaltungen:
- EP-A- 0 437 322
- DE-A- 3 925 641
- US-A- 4 818 161
- US-A- 5 048 375

## Beschreibung

Die Erfindung betrifft eine Vorrichtung zum Spannen von Werkzeugen in einem Spannfutter, welches einen Schrumpfabschnitt zur Aufnahme des Werkzeugs aufweist, wobei dem Schrumpfabschnitt eine Heizeinrichtung in Form eines Gasbrenners zugeordnet ist.

Die Erfindung betrifft ferner ein Verfahren zum Spannen von Werkzeugen in einem Schrumpfabschnitt eines Spannfutters, bei welchem der Schrumpfabschnitt zum Einspannen des Werkstückes erwärmt wird, das Werkzeug in den durch die Erwärmung vergrößerten Schrumpfabschnitt eingeführt wird und nach dem Erhalten im Schrumpfabschnitt reibschlüssig gehalten wird.

Bei Werkzeugen, die mittels mechanischer Spannelemente, insbesondere mittels einer Spannzange oder eines Spannfutters gehalten sind, stellen sich dann Nachteile ein, wenn infolge hoher Drehzahlen und/oder großer Radien des Werkzeuges und/oder großer Werkzeugmassen im Betrieb des Werkzeuges Fliehkräfte auftreten, die der Haltekraft der Spannelemente entgegenwirken. Wenn diese Fliehkräfte zu groß sind und die Haltekräfte ganz oder teilweise übersteigen, so ist der erforderliche Reibschluß zwischen Spindelaufnahme und Werkzeug nicht mehr gewährleistet, mit der Folge, daß das Werkzeug die gewünschten Bearbeitungskräfte zur Spanabnahme nicht mehr aufzubringen vermag.

Eine Vorrichtung der eingangs genannten Art ist durch die US-A-4 818 161 bekannt geworden.

Durch die DE-A-3 925 641 sind ferner ein Spannverfahren und eine weitere Spannvorrichtung bekannt geworden, wobei zur Vermeidung der oben genannten Nachteile das Werkzeug mit Hilfe eines Schrumpfsitzes in einem thermisch aufgeweiteten Schrumpfabschnitt des Spannfutters eingespannt wird. Hierzu wird der Schrumpfabschnitt des Spannfutters zunächst erwärmt, und dann das Werkzeug in den durch die Erwärmung vergrößerten Schrumpfabschnitt eingeführt und schließlich der Abschnitt wieder abkühlt, derart, daß das Werkzeug in der durch die Abkühlung geschrumpften Aufnahme reibschlüssig gehalten wird. Hierzu weist der Schrumpfabschnitt eine konische oder zylindrische Bohrung auf und ist mittels einer Heizeinrichtung beheizbar.

Nach dem bekannten Verfahren und der bekannten Vorrichtung läßt sich zwar grundsätzlich eine wesentliche Verbesserung der Spannkraft erzielen, jedoch hat sich gezeigt, daß auf diese Weise leicht eine Überhitzung des Spannfutters während des Ein- bzw. Ausspannvorganges auftreten kann, und daß nicht immer eine vollständige Einspannung des Werkzeugschaftes sichergestellt ist, so daß die Spannkraft für manche Fälle nicht ausreicht.

Der Erfindung liegt demnach die Aufgabe zugrunde, eine Vorrichtung und ein Verfahren zum Spannen von Werkzeugen zu schaffen, wodurch die Nachteile des Standes der Technik vermieden werden, und insbesondere eine hohe Spannkraft gewährleistet ist. Weiterhin soll eine Überhitzung des Spannfutters weitgehend vermieden werden.

Hinsichtlich der Vorrichtung wird diese Aufgabe dadurch gelöst, daß bei einer Vorrichtung der eingangs genannten Art das Spannfutter zum Spannen des Werkzeugs rotierend angetrieben wird.

Erfindungsgemäß wird durch die Rotation eine besonders gleichmäßige Erwärmung des Schrumpfabschnittes erreicht, so daß einerseits lokale Überhitzungen vermieden werden und andererseits eine gleichmäßige Aufweitung für eine möglichst vollständige Aufnahme des Werkzeugschaftes beim Spannvorgang sichergestellt ist. Dadurch wird eine hohe Spannkraft bei nur einer geringfügigen Erhitzung des Spannfutters gewährleistet.

Bei einer Weiterbildung der Erfindung ist eine Aufnahmeeinrichtung zur Aufnahme des Werkzeugs vorgesehen, durch welche das Werkzeug zum Spannen in Axialrichtung gegen den Schrumpfabschnitt des Spannfutters elastisch beaufschlagbar ist.

Auf diese Weise ist das Werkzeug also vor dem eigentlichen Spanngang in der Aufnahmeeinrichtung zum Beispiel durch Federkraft elastisch gegen den Schrumpfabschnitt des Spannfutters beaufschlagt. Nun wird der Schrumpfabschnitt erwärmt, so daß das Werkzeug mit seinem Schaft in den Schrumpfabschnitt gleitet, sobald dieser ausreichend erwärmt ist und sich so geweitet hat, daß sein Innendurchmesser den Außendurchmesser des Werkzeugschaftes entspricht.

Da unter Wirkung der elastischen Beaufschlagung des Werkzeuges unmittelbar dann, wenn sich der Schrumpfabschnitt des Spannfutters ausreichend geweitet hat, das Werkzeug mit seinem Schaft in den Schrumpfabschnitt eingeschoben wird, wird einerseits eine Überhitzung des Schrumpfabschnittes vermieden und andererseits eine weitgehend vollständige Aufnahme des Werkzeugschaftes in Spannabschnitt gewährleistet und so die Spannkraft weiter verbessert.

Bei einer weiter bevorzugten Ausführungsform der Erfindung ist ein Spindelstock mit einer rotierend antreibbaren Spanneinrichtung vorgesehen, in welcher das Spannfutter an seinem den Schrumpfabschnitt abgewandten Ende einspannbar ist, wobei ferner dem Spindelstock eine Pinole mit einer Aufnahmebüchse zur Aufnahme und Zentrierung des Werkzeugs zugeordnet ist, und wobei ein erstes Ausstoßelement vorgesehen ist, welches zum Einspannen des Werkzeugs unter Federkraft gegen den Werkzeugkopf verspannbar ist.

Auf diese Weise läßt sich der rotierende Antrieb des Spannfutters auf einfache Weise mit konventionellen Mitteln erreichen, nämlich indem das Spannfutter an seinem Ende in einer rotierend antreibbaren Spanneinrichtung, also zum Beispiel einer konventionellen Spannzange eingespannt wird und das einzuspannende Werkzeug in einer damit ausgerichteten Aufnahmebüchse an einer Pinole gehalten ist. Dabei wird durch die Aufnahmebüchse einerseits eine Zentrierung des Werkzeugs sichergestellt, wozu in der Aufnahmebüchse geeignete Ansenkungen vorhanden sein können. Andererseits ermöglicht die Aufnahmebüchse eine schonende Aufnahme des Werkzeugs, so daß eine Beschädigung empfindlicher Schneiden des Werkzeugs vermieden wird.

Bei einer weiteren Ausgestaltung der Erfindung weist das Spannfutter eine zentrale Bohrung zur Durchführung eines zweiten Ausstoßelementes zum Ausspannen des Werkzeuges auf.

Diese Maßnahme hat den Vorteil, daß bei ausreichender Erwärmung des Schrumpfabschnittes das Werkzeug einfach mit Hilfe des Ausstoßelementes aus dem Schrumpfabschnitt ausgestoßen werden kann, um das Werkzeug auszuspannen.

Bei einer weiter bevorzugten Ausführung der Erfindung ist das zweite Ausstoßelement zum Ausspannen des Werkzeuges unter Federkraft gegen den Werkzeugschaft verspannbar.

Auf diese Weise wird erreicht, daß das Werkzeug unmittelbar dann, wenn sich der Spannabschnitt ausreichend erwärmt hat, durch das zweite Ausstoßelement ausgestoßen wird.

Hierdurch wird ein schnelles und sicheres Ausspannen des Werkzeuges erreicht und eine Überhitzung des Spannabschnittes auch beim Ausspannvorgang sicher vermieden.

Bei einer weiteren Ausgestaltung der Erfindung ist vorgesehen, daß die Federkraft des zweiten Ausstoßelementes größer als die Federkraft des ersten Ausstoßelementes ist, und daß zum Ausspannen des Werkzeuges aus dem Spannfutter beide Ausstoßelemente gegen das Werkzeug verspannbar sind.

Auf diese Weise wird ein besonders schonendes Ausstoßen des Werkzeuges aus dem Spannfutter erreicht, da das Werkzeug bei ausreichender Erwärmung des Schrumpfabschnittes infolge der höheren Federkraft des zweiten Ausstoßelementes aus dem Schrumpfabschnitt unter Überwindung der niedrigeren Federkraft des ersten Ausstoßelementes ausgestoßen wird, bei diesem Vorgang jedoch infolge der Federkraft des ersten Ausstoßelementes in der Aufnahmebüchse "weich" abgefangen wird.

Bei einer weiteren Ausführung der Erfindung weist der Schrumpfabschnitt des Spannfutters eine zylindrische Bohrung auf, welche kurz vor einem Befestigungsabschnitt des Spannfutters, welcher zur Befestigung des Spannfutters an einer Werkzeugmaschine dient, endet.

Es hat sich gezeigt, daß im Bereich des Befestigungsabschnittes, welcher in der Regel als Befestigungsflansch ausgebildet ist, infolge der größeren Masse eine geringere Erwärmung auftritt. Mit der vorstehend genannten Maßnahme wird die Wärmeabfuhr durch Wärmeleitung vom Spannabschnitt zum Befestigungsabschnitt des Spannfutters bei dessen Erwärmung begrenzt, da nur ein relativ geringer Querschnitt für die Wärmeleitung zur Verfügung steht. Auf diese Weise ist es möglich, auch am Ende des Spannabschnittes, welcher vorzugsweise als zylindrische Bohrung ausgebildet ist, noch eine thermische Aufweitung zu erzielen, so daß ein vollständiges Einführen des Werkzeugschaftes in den Spannabschnitt ermöglicht wird.

Die Gasflamme des Gasbrenners ist bei einer vorteilhaften Weiterbildung der Erfindung auf den Übergangsbereich zwischen Schrumpfabschnitt und Befestigungsabschnitt seitlich auf das Spannfutter gerichtet.

Ein Gasbrenner, zum Beispiel ein Propangasbrenner zeichnet sich durch einen einfachen Aufbau und eine sichere Funktion aus, und ermöglicht die Aufweitung des Schrumpfabschnittes auf kostensparende Weise, ohne daß es hierzu besonderer Regelungseinrichtungen bedarf, wie sie beispielsweise bei induktiven Heizeinrichtungen notwendig sind. Auch läßt sich die Gasflamme derart auf den Spannflansch richten, daß eine gezielte Aufweitung des Spannflansches im Bodenbereich des Spannabschnittes erreicht werden kann. Ein besonders günstiges Verhalten ergibt sich in Verbindung mit einem rotierend angetriebenen Spannfutter dann, wenn die Gasflamme auf den Übergangsbereich zwischen Schrumpfabschnitt und Befestigungsabschnitt seitlich auf das Spannfutter gerichtet ist.

Hierdurch wird der Spannabschnitt von der Werkzeugaufnahmeseite her zur Bodenseite hin konisch aufgeweitet, so daß gewährleistet ist, daß der Werkzeugschaft vollständig bis zum Anschlag unter Wirkung der Federkraft des ersten Ausstoßelementes in den Spannabschnitt eingeschoben wird, sobald sich die werkzeugseitige Öffnung des Spannabschnittes ausreichend erwärmt hat, um ein Einschieben des Werkzeugschaftes in den Spannabschnitt zu ermöglichen.

Bei einer weiteren Ausgestaltung der Erfindung weist die Oberfläche des Spannfutters im Übergangsbereich zwischen Schrumpfabschnitt und Befestigungsabschnitt Mittel zur Verbesserung der Wärmeaufnahme auf.

Da im Übergangsbereich zwischen dem Schrumpfabschnitt und dem Befestigungsabschnitt, welcher in der Regel als massiver Befestigungsflansch ausgebildet ist, an den sich ein kegeliger Abschnitt anschließt und der somit eine erheblich größere Masse und eine erheblich größere Wärmekapazität als der Schrumpfabschnitt aufweist, ein besonders hoher Wärmeabfluß auftritt, der zusätzlich noch durch die Rotation verstärkt wird, wird durch die Mittel zur Verbesserung der Wärmeaufnahme im Übergangsbereich eine lokal ausreichende Wärmeübertragung ermöglicht, so daß sich eine konische Aufweitung des Schrumpfabschnittes ergibt, um ein vollständiges Spannen des Werkzeugschaftes sicherzustellen.

Die Verbesserung der Wärmeaufnahme kann auf besonders einfache Weise dadurch erreicht werden, daß die Oberfläche des Spannfutters im Übergangsbereich aufgerauht ist, z. B. durch Sandstrahlen.

In alternativer Weise ist es möglich, die Oberfläche des Spannfutters im Übergangsbereich gewellt, gerippt, verzahnt, gebördelt oder in ähnlicher Weise auszuführen.

In beiden Fällen wird jedoch die Wärmeübertragung durch die auf das Spannfutter gerichtete Gasflamme besonders im Übergangsbereich erheblich verbessert, um so die gewünschte konische Aufweitung des Schrumpfabschnittes zu erzielen.

In bevorzugter Weiterbildung der Erfindung weist der Gasbrenner einen Brennerkopf auf, der derart angeordnet ist, daß die Gasflamme um etwa 10° bis 20°, insbesondere um etwa 15° gegenüber der Radialrichtung geneigt auf den Übergangsbereich des Spannfutters gerichtet ist.

Hierdurch ergibt sich eine besonders günstige Wärmeverteilung im Übergangsbereich des Spannabschnittes.

Es hat sich als besonders günstig erwiesen, wenn das Spannfutter zum Spannen des Werkzeuges mit etwa 200 bis 500 Minute ⁻¹, insbesondere mit etwa 300 bis 400 Minute ⁻¹ rotiert.

Da das Spannfutter vorzugsweise nur an einem Ende eingespannt ist, bewirkt die schnelle Rotation eine Abkühlung des Spannfutters infolge der Luftkonvektion, insbesondere in dem Bereich des Spannfutters, welcher einen größeren Radius aufweist, also insbesondere im Bereich des Befestigungsabschnittes, während der Schrumpfabschnitt durch die Gasflamme gezielt erwärmt wird.

Je nach Größe und Material des Spannfutters wird dieses zum Spannen des Werkzeugs im Übergangsbereich zwischen Schrumpfabschnitt und Befestigungsabschnitt auf etwa 150° bis 250°C, insbesondere auf etwa 180° bis 200°C erwärmt, bis sich der Schrumpfabschnitt an seiner werkzeugseitigen Öffnung ausreichend geweitet hat, so daß das Werkzeug mit seinem Schaft in den Schrumpfabschnitt eingeschoben wird.

Es hat sich gezeigt, daß sich bei einer derartigen Dimensionierung ein guter Preßsitz des Werkzeuges im Schrumpfabschnitt ergibt und eine lokale Überhitzung des Spannfutters bzw. des Werkzeugschaftes sicher vermieden wird. Mit einem derartigen Preßsitz lassen sich um etwa 100 % größere Spannkräfte erreichen, als dies bei Verwendung herkömmlicher mechanischer Spannfutter möglich ist.

In weiter vorteilhafter Ausgestaltung der Erfindung ist die Heizeinrichtung mit einer Abschalteinrichtung gekoppelt, um die Heizeinrichtung nach Ausstoßen des Werkzeugs in den Schrumpfabschnitt und/oder nach dem Ausstoßen des Werkzeugs aus dem Schrumpfabschnitt automatisch abzuschalten.

Diese Maßnahme hat den Vorteil, daß die Erwärmung des Spannfutters durch die automatische Abschaltung auf ein Mindestmaß reduziert wird, wodurch der Vorgang insgesamt verkürzt wird und ein versehentliches weiteres Erwärmen des Spannfutters nach Beendigung des Einspann- bzw. Ausspannvorganges vermieden wird.

Um die notwendige axiale Verschiebung des Werkzeugs beim Ein- bzw. Ausspannen zu ermöglichen, ist die Pinole in bevorzugter Weiterbildung gegenüber dem Spindelstock auf einer Führung mittels eines Pneumatik- oder Hydraulikzylinders verfahrbar angeordnet.

Auf diese Weise läßt sich die axiale Verschiebung der Pinole mit besonders einfachen Mitteln erreichen.

Hinsichtlich des Verfahrens wird die Aufgabe erfindungsgemäß dadurch gelöst, daß bei einem Verfahren der eingangs genannten Art das Spannfutter und das Werkzeug während der Erwärmung gemeinsam um die Längsachse rotierend angetrieben werden, und daß das Werkzeug zum Einspannen in Axialrichtung gegen den Schrumpfabschnitt elastisch beaufschlagt wird, während der Schrumpfabschnitt erwärmt wird, bis sich der Schrumpfabschnitt ausreichend geweitet hat, so daß das Werkzeug unter Wirkung der Axialkraft in den Schrumpfabschnitt eingestoßen wird.

Erfindungsgemäß wird das Werkzeug durch die elastische Beaufschlagung des Werkzeuges in Axialrichtung, welche zum Beispiel durch Federkraft erfolgen kann, unmittelbar dann in den Schrumpfabschnitt des Spannfutters eingestoßen, wenn sich der Schrumpfabschnitt infolge der Erwärmung ausreichend geweitet hat.

Auf diese Weise wird vermieden, daß das Spannfutter stärker erhitzt wird, als dies unbedingt notwendig ist, da ohne weiteres Zutun automatisch das Werkzeug in den Schrumpfabschnitt eingestoßen wird, sobald sich der Schrumpfabschnitt ausreichend geweitet hat. Eine zusätzliche Temperaturkontrolle des Spannfutters oder des Schrumpfabschnittes oder eine Temperatursteuerung der Heizeinrichtung wird auf diese Weise überflüssig. Auch wird eine hohe Spannkraft erreicht, da eine vollständige Aufnahme des Werkzeugschaftes sichergestellt ist.

In bevorzugter Weiterbildung des erfindungsgemäßen Verfahrens wird das Werkzeug zum Ausspannen gegen seinen Werkzeugschaft in Axialrichtung elastisch beaufschlagt, während der Schrumpfabschnitt erwärmt wird, so daß das Werkzeug unter Wirkung der Axialkraft aus dem schrumpfabschnitt des Spannfutters ausgestoßen wird.

Mit einer derartigen Ausführung läßt sich in entsprechender Weise eine Überhitzung des Schrumpfabschnittes beim Ausstoßvorgang vermeiden, da das Werkzeug unter Wirkung der Axialkraft unmittelbar dann aus dem Schrumpfabschnitt des Spannfutters ausgestoßen wird, wenn sich der Schrumpfabschnitt infolge der Erwärmung ausreichend geweitet hat.

Die Erfindung wird nachstehend anhand eines bevorzugten Ausführungsbeispieles, das in der Zeichnung dargestellt ist, näher erläutert. Darin zeigen:
- Fig. 1: eine teilweise geschnittene Längsansicht einer erfindungsgemäßen Vorrichtung mit ausgefahrener Pinole und
- Fig. 2: eine vereinfachte Darstellung der Vorrichtung gemäß Fig. 1, bei der die Pinole vom Werkzeug zurückgefahren ist.

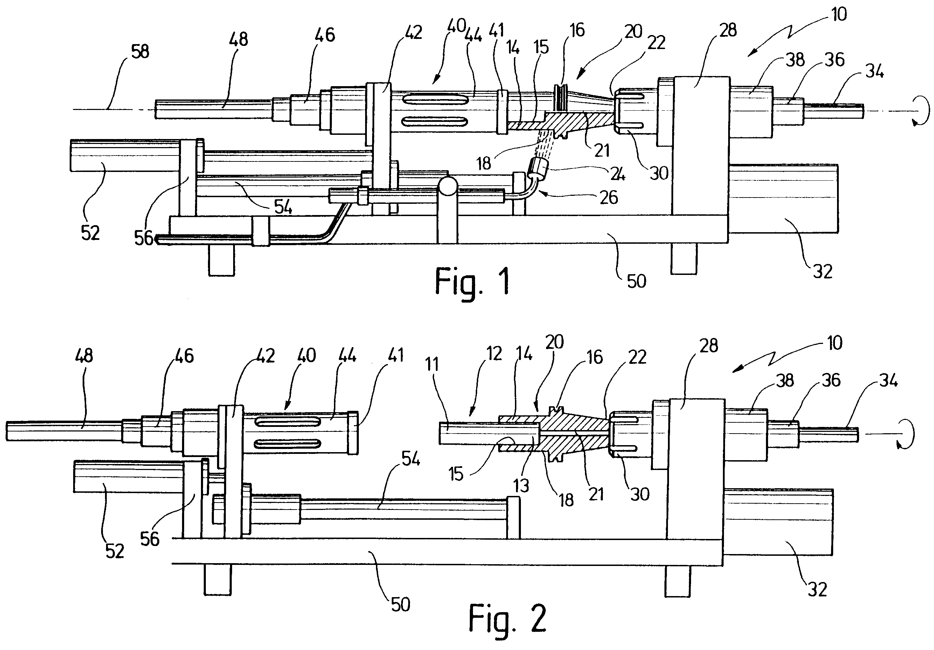

In den Fig. 1 und 2 ist eine erfindungsgemäße Vorrichtung insgesamt mit der Ziffer 10 bezeichnet.

Auf einer Grundplatte 50 ist ein Spindelstock 28 angeordnet, welcher mit einem Antriebsmotor 32 über einen Riementrieb zum Antrieb einer herkömmlichen Spanneinrichtung 30 in Form einer Spannzange gekoppelt ist.

Gegenüber dem Spindelstock 28 ist eine Pinole 42 in Axialrichtung 58 verschiebbar angeordnet, welche auf einer horizontalen Führungsstange 54 in Axialrichtung geführt ist und mittels eines Pneumatikzylinders 52 in Axialrichtung 58 verfahrbar ist, welcher über eine vertikale Stehplatte 56 an der Grundplatte 50 befestigt ist.

Die Spanneinrichtung 30 dient zur Aufnahme eines insgesamt mit der Ziffer 20 bezeichneten Spannfutters, in welches ein Werkzeug 12 unter Schrumpfsitz eingespannt werden kann. Das Spannfutter 20 ist als Werkzeughalter mit einem genormten Spannkegel ausgebildet.

Das Spannfutter 20 wird an seinem dem Werkzeug 12 abgewandten Ende 22 in der Spanneinrichtung 30 eingespannt und mit Hilfe einer Rändelmutter 38 fixiert.

Das Spannfutter 20 weist einen werkzeugseitigen Schrumpfabschnitt 14 auf, in welchem eine zylindrische Bohrung 15 zur Aufnahme des Werkzeugschaftes 13 vorgesehen ist. An dem Schrumpfabschnitt 14 schließt sich ein Befestigungsabschnitt 16 an, welcher einen Befestigungsflansch und einen nachfolgenden Spannkegel herkömmlicher Bauweise aufweist. Die zylindrische Bohrung 15 des Schrumpfabschnittes 14 endet kurz vor dem Befestigungsflansch des nachfolgenden Befestigungsabschnittes 16. Das Spannfutter 20 ist von einer zentralen Bohrung 21 durchsetzt, durch welche ein Ausstoßelement 34 zum Ausstoßen des Werkzeugs 12 in das Spannfutter 20 einfahrbar ist.

Zur Aufnahme des Werkzeugs 12 vor dem Einspannvorgang in das Spannfutter 20 bzw. nach dem Ausspannvorgang dient eine insgesamt mit der Ziffer 40 bezeichnete Aufnahmeeinrichtung, welche an der Pinole 42 gehalten ist. Die Aufnahmeeinrichtung 40 umfaßt eine zylindrische Halterung 44 für das Werkzeug 12, das mittels einer Aufnahmebüchse 41 gegenüber dem Spannfutter 20 zentriert ist, wozu geeignete Ansenkungen in der Aufnahmebüchse vorgesehen sind. Die Aufnahmebüchse 41 dient ferner dazu, eine Einführung des Werkzeuges 12 zu ermöglichen, ohne daß am Werkzeugkopf 11 vorgesehene empfindliche Schneiden an der Halterung 44 anschlagen, was zu einer Beschädigung führen könnte.

In die Halterung 44 ist ein federbelastetes Ausstoßelement 48 einfahrbar, welches über ein weiches Anschlagelement aus Aluminium mittels einer Verriegelungsbüchse 46 gegen den Werkzeugkopf 11 verspannt werden kann, um das Werkzeug 12 in Richtung auf das Spannfutter 20 federnd zu beaufschlagen.

Das entsprechend aufgebaute, zweite Ausstoßelement 34 ist auf der gegenüberliegenden Seite am Spindelstock 28 angeordnet. Es ist gleichfalls federbelastet und kann mittels einer Verriegelungsbüchse 36 durch die zentrale Öffnung 21 des Spannfutters 20 gegen den Werkzeugschaft 13 verspannt werden.

Zur Erwärmung des Spannfutters 20 zum Ein- bzw. Ausspannen des Werkzeuges 12 ist eine Heizeinrichtung 26 in Form eines Propangasbrenners vorgesehen, dessen Brennerkopf 24 derart ausgerichtet ist, daß seine Gasflamme auf den Übergangsbereich 18 zwischen Schrumpfabschnitt 14 und Befestigungsflansch des Befestigungsbereiches 16 gerichtet ist. Dabei beträgt die Neigung der Gasflamme gegenüber der Radialen etwa 15°.

Die Gasflamme trifft somit unmittelbar auf den winkligen Übergangsbereich 18 am Beginn des Befestigungsflansches auf, der zusätzlich, zum Beispiel durch Sandstrahlen, aufgerauht ist, um die Wärmeübertragung im Übergangsbereich 18 auf das Spannfutter 20 zu verbessern.

Anstelle einer Aufrauhung des Übergangsbereiches 18 kann dieser auch eine gewellte, gezackte, verzahnte oder gebördelte Oberfläche aufweisen.

Die Arbeitsweise der Vorrichtung ist die folgende:

Soll ein Werkzeug 12 in das Spannfutter 20 eingespannt werden, so wird zunächst das Spannfutter 20 an seinem Ende 22 in die Spanneinrichtung 30 eingespannt, welche mit Hilfe der Rändelmutter 38 angezogen wird.

In der in Fig. 2 dargestellten vom Spindelstock 28 entfernten Stellung kann nun das Werkzeug 12 mit dem Werkzeugkopf 11 in die Aufnahmebüchse 41 eingeschoben werden und im Halter 44 befestigt werden. Anschließend wird die Pinole 42 in die in Fig. 1 gezeigte Stellung in Richtung auf das Spannfutter 20 verfahren, bis der Werkzeugschaft 13 des Werkzeuges 12 an der zylindrischen Bohrung 15 von außen anschlägt. Anschließend wird das erste Ausstoßelement 48 gegen den Werkzeugkopf 11 gespannt und mittels der Verriegelungsbuchse 46 verriegelt, so daß der Werkzeugschaft 13 mit einer Federkraft von etwa 100 N gegen die noch zu kleine zylindrische Öffnung 15 gepreßt wird.

Während dieses Vorganges ist das zweite Ausstoßelement 34 nicht gespannt.

Nun wird der Gasbrenner in Betrieb gesetzt, um den Schrumpfabschnitt 15 zu erwärmen. Nach etwa 2 bis 2,5 Minuten hat die Propangasflamme den Schrumpfabschnitt 15 des Spannfutters 20 so aufgeweitet, daß das Werkzeug 12 mit seinem Schaft 13 schlagartig nach innen rutscht und zwar unter der Wirkung der Feder des ersten Ausstoßelementes 48.

Durch die Richtung der Gasflamme auf den Übergangsbereich 18 und dessen zusätzliche Aufrauhung wird die zylindrische Bohrung 15 an ihrem spindelkopfseitigen Ende stärker erwärmt, so daß sich eine konische Aufweitung der Bohrung 15 ergibt. Beim Durchrutschen des Werkzeugschaftes 13 in den Schrumpfabschnitt 14 gelangt daher der Werkzeugschaft vollständig in die Bohrung 15, bis dieser am Ende der Bohrung anschlägt.

Der Gasbrenner wird nun entweder von Hand abgeschaltet, oder mit Hilfe einer Automatik (nicht dargestellt), welche auf die axiale Verschiebung des Werkzeuges reagiert und so den Gasbrenner abschaltet.

Die Aufnahmeeinrichtung 40 kann nun mit Hilfe des Pneumatikzylinders 52 auf der Führungsstange 54 nach links verfahren werden, damit das Spannfutter 20 mit dem im Schrumpfsitz eingespannten Werkzeug 12 aus der Spanneinrichtung 30 zur weiteren Verwendung in einer Werkzeugmaschine ausgespannt werden kann.

Soll das Werkzeug 12 aus dem Spannfutter 20 wieder ausgespannt werden, so wird wiederum zunächst das Spannfutter 20 an seinem Ende 22 in die Spanneinrichtung 30 eingespannt. Dann wird die Aufnahmeeinrichtung 40 mit Hilfe des Pneumatikzylinders 52 auf der Führungsstange 54 nach rechts verfahren, bis der Werkzeugkopf 11 durch die Aufnahmebüchse 41 in die Halterung 44 hineinragt.

Das zweite Ausstoßelement 34 wird nun durch die zentrale Öffnung 21 des Spannfutters 20 gegen den Werkzeugschaft 13 verspannt und mit Hilfe der Verriegelungsbüchse 36 verriegelt.

Ferner wird auch das erste Ausstoßelement 48 gegen den Werkzeugkopf 11 gespannt und mit Hilfe der Verriegelungsbüchse 46 verriegelt. Da die Federkraft des zweiten Ausstoßelementes 34 mit etwa 130 N etwas höher bemessen ist als die Federkraft des ersten Ausstoßelementes von etwa 100 N, ergibt sich im Ergebnis eine Kraftkomponente von etwa 30 N, die das Werkzeug 12 nach links aus der zylindrischen Bohrung 15 zu drücken sucht. Sobald der Schrumpfabschnitt 14 nach Einschalten des Gasbrenners ausreichend erwärmt ist, wird das Werkzeug 12 durch das zweite Ausstoßelement nach links aus dem Schrumpfabschnitt 14 ausgestoßen und dabei durch die Federkraft des ersten Ausstoßelementes 48 weich im Halter 44 aufgefangen.

In alternativer Weise kann beim Ausspannvorgang auch das erste Ausstoßelement außer Funktion bleiben, so daß das Werkzeug 12 lediglich durch das zweite Ausstoßelement 34 in den Halter 44 ausgestoßen wird und dort aufgefangen wird.

## Patentansprüche

1. Vorrichtung zum Spannen von Werkzeugen in einem Spannfutter, welches einen Schrumpfabschnitt (14) zur Aufnahme des Werkzeuges (12) aufweist, wobei dem Schrumpfabschnitt (14) eine Heizeinrichtung (26) in Form eines Gasbrenners zugeordnet ist, dadurch gekennzeichnet, daß das Spannfutter (20) zum Spannen des Werkzeuges (12) rotierend angetrieben wird.

2. Vorrichtung nach Anspruch 1, dadurch gekennzeichnet, daß eine Aufnahmeeinrichtung (40) zur Aufnahme des Werkzeugs (12) vorgesehen ist, durch welche das Werkzeug (12) zum Spannen in Axialrichtung gegen den Schrumpfabschnitt (14) des Spannfutters (20) elastisch beaufschlagbar ist.

3. Vorrichtung nach Anspruch 1 oder 2, dadurch gekennzeichnet, daß ein Spindelstock (28) mit einer rotierend antreibbaren Spanneinrichtung (30) vorgesehen ist, in welcher das Spannfutter (20) an seinem dem Schrumpfabschnitt (14) abgewandten Ende (22) einspannbar ist, daß dem Spindelstock (28) eine Pinole (42) mit einer Aufnahmebüchse (41) zur Aufnahme und Zentrierung des Werkzeugs (12) zugeordnet ist, und daß ein erstes Ausstoßelement (48) vorgesehen ist, welches zum Einspannen des Werkzeugs (12) unter Federkraft gegen den Werkzeugkopf (11) verspannbar ist.

4. Vorrichtung nach Anspruch 1, 2 oder 3, dadurch gekennzeichnet, daß das Spannfutter (20) eine zentrale Bohrung (21) zur Durchführung eines zweiten Ausstoßelementes (34) zum Ausspannen des Werkzeugs (12) aufweist.

5. Vorrichtung nach Anspruch 4, dadurch gekennzeichnet, daß das zweite Ausstoßelement (34) zum Ausspannen des Werkzeugs (12) unter Federkraft gegen den Werkzeugschaft (13) verspannbar ist.

6. Vorrichtung nach Anspruch 5, dadurch gekennzeichnet, daß die Federkraft des zweiten Ausstoßelementes (34) größer als die Federkraft des ersten Ausstoßelementes (48) ist, und daß zum Ausspannen des Werkzeugs (12) aus dem Spannfutter (20) beide Ausstoßelemente (34, 48) gegen das Werkzeug (12) verspannbar sind.

7. Vorrichtung nach einem oder mehreren der vorhergehenden Ansprüche, dadurch gekennzeichnet, daß der Schrumpfabschnitt (14) eine zentrale, im wesentlichen zylindrische Bohrung (15) aufweist, welche kurz vor einem Befestigungsabschnitt (16) des Spannfutters (20), welcher zur Befestigung des Spannfutters (20) an einer Werkzeugmaschine dient, endet.

8. Vorrichtung nach einem oder mehreren der vorhergehenden Ansprüche, dadurch gekennzeichnet, daß die Gasflamme des Gasbrenners auf den Übergangsbereich (18) zwischen Schrumpfabschnitt (14) und Befestigungsabschnitt (16) seitlich auf das Spannfutter (20) gerichtet ist.

9. Vorrichtung nach Anspruch 8, dadurch gekennzeichnet, daß der Gasbrenner einen Brennerkopf (24) aufweist, der derart angeordnet ist, daß die Gasflamme um etwa 10° bis 20°, insbesondere um etwa 15° gegenüber der Radialrichtung geneigt auf den Übergangsbereich (18) des Spannfutters (20) gerichtet ist.

10. Vorrichtung nach Anspruch 8 oder 9, dadurch gekennzeichnet, daß die Oberfläche des Spannfutters (20) im Übergangsbereich (18) Mittel zur Verbesserung der Wärmeaufnahme aufweist.

11. Vorrichtung nach Anspruch 10, dadurch gekennzeichnet, daß die Oberfläche des Spannfutters (20) im Übergangsbereich (18) aufgerauht ist, insbesondere sandgestrahlt ist.

12. Vorrichtung nach Anspruch 10 oder 11, dadurch gekennzeichnet, daß die Oberfläche des Spannfutters (20) im Übergangsbereich (18) gewellt, gerippt, gebördelt oder verzahnt ist.

13. Vorrichtung nach einem oder mehrerend er vorhergehenden Ansprüche, dadurch gekennzeichnet, daß das Spannfutter (20) zum Spannen des Werkzeugs (12) mit einer Drehzahl von etwa 200 bis 500 min ⁻¹, insbesondere mit etwa 300 bis 400 min ⁻¹ antreibbar ist.

14. Vorrichtung nach einem oder mehreren der vorhergehenden Ansprüche, dadurch gekennzeichnet, daß das Spannfutter (20) zum Spannen des Werkzeugs (12) im Übergangsbereich zwischen Schrumpfabschnitt (14) und Befestigungsabschnitt (16) auf etwa 150 bis 250°C, insbesondere auf etwa 180 bis 200°C erwärmbar ist.

15. Vorrichtung nach einem oder mehreren der vorhergehenden Ansprüche, dadurch gekennzeichnet, daß die Heizeinrichtung (26) mit einer Abschalteinrichtung gekoppelt ist, um die Heizeinrichtung (26) nach dem Einstoßen des Werkzeugs (12) in den Schrumpfabschnitt (14) und/oder nach dem Ausstoßen des Werkzeugs (12) aus dem Schrumpfabschnitt (14) automatisch abzuschalten.

16. Vorrichtung nach einem oder mehreren der Ansprüche 3 bis 15, dadurch gekennzeichnet, daß die Pinole (42) gegenüber dem Spindelstock (28) auf einer Führung (54) mittels eines Pneumatik- oder Hydraulikzylinders (52) verfahrbar angeordnet ist.

17. Verfahren zum Spannen von Werkzeugen in einem Schrumpfabschnitt (14) eines Spannfutters (20), bei dem der Schrumpfabschnitt (14) zum Einspannen des Werkzeugs (12) erwärmt wird, das Werkzeug (12) in dem durch die Erwärmung vergrößerten Schrumpfabschnitt (14) eingeführt wird und nach dem erkaltenem Schrumpfabschnitt (14) reibschlüssig gehalten wird, dadurch gekennzeichnet, daß das Spannfutter (20) und das Werkzeug (12) während der Erwärmung gemeinsam um die Längsachse rotierend angetrieben werden, und daß das Werkzeug (12) zum Einspannen in Axialrichtung gegen den Schrumpfabschnitt elastisch beaufschlagt wird, während der Schrumpfabschnitt (14) erwärmt wird, bis sich der Schrumpfabschnitt (14) ausreichend geweitet hat, so daß das Werkzeug (12) unter Wirkung der Axialkraft in den Schrumpfabschnitt (14) eingestoßen wird.

18. Verfahren nach Anspruch 17, dadurch gekennzeichnet, daß das Werkzeug (12) zum Ausspannen gegen seinen Werkzeugschaft (13) in Axialrichtung elastisch beaufschlagt wird, während der Schrumpfabschnitt (14) erwärmt wird, so daß das Werkzeug (12) unter Wirkung der Axialkraft aus dem Schrumpfabschnitt (14) des Spannfutters (20) ausgestoßen wird.

19. Verfahren nach Anspruch 17 oder 18, dadurch gekennzeichnet, daß das Spannfutter (20) im Übergangsbereich (18) zwischen Schrumpfabschnitt (14) und Befestigungsabschnitt (16) gezielt erwärmt wird.

## Claims

1. Device for clamping tools in a clamping chuck that has a shrinkage segment (14) to receive the tool (12), with a heating apparatus (26) designed as a gas burner being associated with the shrinkage segment (14), characterized in that said clamping chuck (20) is rotatingly driven for clamping the tool.

2. Device according to claim 1, characterized in that a receiving means (40) for receiving the tool (12) is provided, by means of which, for clamping purposes, said tool (12) can be elastically pressed in the dial direction against said shrinkage segment (14) of said clamping chuck (20).

3. Device according to claim 1 or 2, characterized in that there is provided a headstock (28) with a clamping means (30) that can be rotationally driven, into which said clamping chuck (20) can be clamped at its end (22) opposite said shrinkage segment (14), in that a sleeve (42) with a receiving bushing (41) to receive and center said tool (12) is associated with the headstock (28), and in that a first ejector element (48) is provided, which in order to clamp said tool (12) can be braced against the tool head (11) under spring force.

4. Device according to claim 1, 2, or 3, characterized in that said clamping chuck (20) comprises a central bore (21) for passage of a second ejector element (34) to unclamp said tool (12).

5. Device according to claim 4, characterized in that for unclamping said tool (12) said second ejector element (34) can be braced under spring force against said tool shaft (13).

6. Device according to claim 5, characterized in that the spring force of said second ejector element (34) is greater than the spring force of said first ejector element (48), and wherein in order to unclamp said tool from said clamping chuck (20), both ejector elements (34, 48) can be braced against said tool (12).

7. Device according to one or more of the foregoing claims, characterized in that said shrinkage segment (14) has a central essentially cylindrical bore (15) that ends shortly before a fastening segment (16) of said clamping chuck (20) which serves to fasten said clamping chuck (20) to a machine tool.

8. Device according to one or more of the foregoing claims, characterized in that the gas flame of of said gas burner is directed onto said transition region (18) between said shrinkage segment (14) and said fastening segment (16) on the side of said clamping chuck (20).

9. Device according to claim 8, characterized in that the gas burner comprises a burner head (24) that is arranged so that the gas flame is directed onto said transition region (18) of said clamping chuck (20) at an angle of approximately 10° to 20°, especially approximately 15°, with respect to the radial direction.

10. Device according to any of claims 8 or 9, characterized in that the surface of said clamping chuck (20) in the transition region is provided with means for improving the heat transfer.

11. Device according to claim 10, characterized in that the surface of said clamping chuck (20) is roughened, in particular sand blasted in the transition region (18).

12. Device according to claim 10 or 11, characterized in that the surface of said clamping chuck (20) is corrugated, serrated, knurled or toothed in the transition region.

13. Device according to one or more of the foregoing claims, characterized in that in order to clamp said tool (12), said clamping chuck (20) can be rotated at approximately 200 to 500 rpm, especially at approximately 300 to 400 rpm.

14. Device according to one or more of the foregoing claims, characterized in that in order to clamp said tool (12), said clamping chuck (20) is heated in the transition region between said shrinkage segment (14) and said fastening segment (16) to approximately 150° to 250°C, especially to approximately 180° to 200°C.

15. Device according to one or more of the foregoing claims, characterized in that said heating apparatus (26) is coupled to a shutoff means, in order to shut off said heating apparatus (26) automatically after insertion of said tool (12) into said shrinkage segment (14) and/or after ejection of said tool (12) from said shrinkage segment (14).

16. Device according to one or more of claims 3 to 15, characterized in that said sleeve (42) is arranged so that it can be moved with respect to the headstock (28) on a guide (54) by means of a pneumatic or hydraulic cylinder (52).

17. Process for clamping tools in a shrinkage segment (14) of a clamping chuck (20), in which in order to clamp said tool (12) said shrinkage segment (14) is heated, said tool (12) is introduced into said shrinkage segment (14) that has been enlarged by heating, and after cooling is frictionally retained in said shrinkage segment (14), characterized in that for clamping purposes said tool (12) is rotatingly driven about its longitudinal axis and is elastically pressed in the axial direction against said shrinkage segment (14), while said shrinkage segment (14) is heated until said shrinkage segment (14) has expanded sufficiently so that the tool is pushed into said shrinkage segment (14) under the action of the axial force.

18. Process according to claim 17, characterized in that for unclamping purposes elastic pressure is exerted on said tool (12) against its tool shaft (13) in the axial direction while said shrinkage segment (14) is heated, so that said tool (12) is ejected from said shrinkage segment (14) of said clamping chuck (20) under the action of the axial force.

19. Process according to claim 17 or 18, characterized in that said clamping chuck (20) is heated particularly in the transition region (18) between said shrinkage segment (18) and said fastening segment.

## Revendications

1. Dispositif pour serrer des outils dans un mandrin, qui présente une section de retrait (14) destinée à recevoir l'outil (12), un dispositif de chauffage (26) de la forme d'un brûleur à gaz étant associé à la section de retrait (14), caractérisé en ce que le mandrin (20) est entraîné en rotation pour serrer l'outil (12).

2. Dispositif selon la revendication 1, caractérisé en ce qu'un dispositif de réception (40) destiné à recevoir l'outil (12) est prévu, à travers lequel, pour le serrage, l'outil (12) peut être mis sous contrainte élastique dans la direction axiale contre la section de retrait (14) du mandrin (20).

3. Dispositif selon la revendication 1 ou 2, caractérisé en ce qu'une poupée (28) à dispositif de serrage (30) pouvant être entraîné en rotation est prévue, dans lequel le mandrin (20) peut être serré à son extrémité (22) opposée à la section de retrait (14), en ce qu'une douille de contre-poupée (42) avec une douille de réception (41) destinée à recevoir et centrer l'outil (12) est associée à la poupée (28), et en ce qu'un premier élément éjecteur (48) est prévu, lequel peut être serré élastiquement contre la tête d'outil (11) pour serrer l'outil.

4. Dispositif selon la revendication 1, 2 ou 3, caractérisé en ce que le mandrin (20) présente un alésage central (21) pour le passage d'un deuxième élément éjecteur (34) destiné à desserrer l'outil (12).

5. Dispositif selon la revendication 4, caractérisé en ce que le deuxième élément éjecteur (34) destiné à desserrer l'outil (12) peut être serré élastiquement contre la tige de l'outil (13).

6. Dispositif selon la revendication 5, caractérisé en ce que la force élastique du deuxième élément éjecteur (34) est supérieure à la force élastique du premier élément éjecteur (48), et en ce que, pour desserrer l'outil (12) hors du mandrin (20), les deux éléments éjecteurs (34, 48) peuvent être serrés contre l'outil (12).

7. Dispositif selon une ou plusieurs des revendications précédentes, caractérisé en ce que la section de retrait (14) présente un perçage central (15) pour l'essentiel cylindrique, qui se termine peu avant une section de fixation (16) du mandrin (20), qui sert à la fixation du mandrin (20) sur une machine-outil.

8. Dispositif selon une ou plusieurs des revendications précédentes, caractérisé en ce que la flamme gazeuse du brûleur à gaz est dirigée latéralement sur le mandrin (20) sur la zone de transition (18) entre la section de retrait (14) et la section de fixation (16).

9. Dispositif selon la revendication 8, caractérisé en ce que le brûleur à gaz présente une tête de brûleur (24) qui est placée de telle manière que la flamme gazeuse est dirigée selon une inclinaison d'environ 10 à 20°, en particulier d'environ 15°, par rapport à la direction radiale sur la zone de transition (18) du mandrin (20).

10. Dispositif selon la revendication 8 ou 9, caractérisé en ce que la surface du mandrin (20) présente dans la zone de transition (18) des moyens d'amélioration de l'absorption de chaleur.

11. Dispositif selon la revendication 10, caractérisé en ce que la surface du mandrin (20) dans la zone de transition (18) est rendue rugueuse, en particulier sablée.

12. Dispositif selon la revendication 10 ou 11, caractérisé en ce que la surface du mandrin (20) est ondulée, cannelée, bordée ou dentée dans la zone de transition (18).

13. Dispositif selon une ou plusieurs des revendications précédentes, caractérisé en ce que le mandrin (20), pour le serrage de l'outil (12), peut être entraîné à une vitesse de rotation d'environ 200 à 500 mn⁻¹, en particulier environ 300 à 400 mn⁻¹.

14. Dispositif selon une ou plusieurs des revendications précédentes, caractérisé en ce que le mandrin (20), pour le serrage de l'outil (12) peut être chauffé dans la zone de transition entre la section de retrait (14) et la section de fixation (16) à environ 150 à 250 °C, en particulier à environ 180 à 200°C.

15. Dispositif selon une ou plusieurs des revendications précédentes, caractérisé en ce que le dispositif de chauffage (26) est couplé à un dispositif d'arrêt pour arrêter automatiquement le dispositif de chauffage (26) après l'insertion de l'outil (12) dans la section de retrait (14) et/ou après l'éjection de l'outil (12) hors de la section de retrait (14).

16. Dispositif selon une ou plusieurs des revendications 3 à 15, caractérisé en ce que la douille de contre-poupée (42) est placée mobile au moyen d'un cylindre pneumatique ou hydraulique (52), en face de la poupée (28) sur un guidage (54).

17. Procédé pour serrer des outils dans une section de retrait (14) d'un mandrin (20), dans lequel la section de retrait (14) est chauffée pour serrer l'outil (12), l'outil (12) est introduit dans la section de retrait (14) élargie par le chauffage et y est ensuite maintenu par ajustement serré une fois la section de retrait (14) refroidie, caractérisé en ce que le mandrin (20) et l'outil (12) sont entraînés en rotation commune autour de l'axe longitudinal pendant le chauffage, et en ce que, pour le serrage, l'outil (12) est mis sous contrainte élastique dans la direction axiale contre la section de retrait (14), jusqu'à ce que la section de retrait (14) se soit suffisamment élargie, de sorte que l'outil (12) est enfoncé dans la section de retrait (14) sous l'action de la force axiale.

18. Procédé selon la revendication 17, caractérisé en ce que, pour le desserrage, l'outil (12) est mis sous contrainte élastique dans la direction axiale contre sa tige d'outil (13), pendant que la section de retrait (14) est chauffée, de sorte que l'outil (12) est extrait sous l'effet de la force axiale hors de la section de retrait (14) du mandrin (20).

19. Procédé selon la revendication 17 ou 18, caractérisé en ce que le mandrin (20) est chauffé de manière ciblée dans la zone de transition (18) entre la section de retrait (14) et la section de fixation (16).
